# EUROPÄISCHE PATENTSCHRIFT

(11) **EP 2 101 235 B1**
(45) Veröffentlichungstag und Bekanntmachung des Hinweises auf die Patenterteilung: **09.10.2019**
(21) Anmeldenummer: 08170768.9
(22) Anmeldetag: 05.12.2008
(51) Int. Cl.: G05B 19/418, G05B 19/414

(54) **Elektrische Ausstattung zur Materialflusskoordination zwischen mehreren mechanisch miteinander verbundenen Förderern zum Fördern von Stückgütern**
Electric fitting for material flow coordination between several conveyors connected mechanically with each other to convey piece goods
Equipement électrique destiné à la coordination du flux de matériel entre plusieurs convoyeur reliés les uns aux autres mécaniquement pour convoyer des marchandises au détail

(30) Priorität: 10.03.2008 DE 102008013372
(43) Veröffentlichungstag der Anmeldung: 16.09.2009
(73) Patentinhaber: Siemens Aktiengesellschaft, 80333 München (DE)
(72) Erfinder: Steins, Frank, 41462, Neuss (DE); Linke, Martin, 81371, München (DE); Lorenz, Alois, 94086, Griesbach (DE)

(56) Entgegenhaltungen:
- EP-A2- 1 298 771
- DE-A1- 4 236 536
- JP-A- 2000 344 334
- US-A1- 2006 030 968
- US-A1- 2006 272 929
- US-B1- 6 848 933

## Beschreibung

Die vorliegende Erfindung befasst sich mit der elektrischen Ausstattung mechanischer Förderer und der damit verbundenen Materialflusskoordination untereinander bei einer Verbindung von mehreren Förderern.

Der Begriff Förderer umfasst allgemein logisch gesteuerte Fördertechnik, wie Rollenförderer, Bandförderer und Kettenförderer zum Fördern von Stückgütern
In der Logistik werden zwischen Wareneingang und Warenausgang Stückgüter unter anderem auf Förderern transportiert, deren Ziel ist, Stückgüter zu sortieren und/oder zu verteilen und/oder einzulagern, zu kommissionieren oder zur weiteren Bearbeitung Arbeitsplätzen oder Maschinen zuzuführen. Das trifft insbesondere auf Stückgüter aus der Versandlogistik, wie Kartons, Behälter und Pakete zu, gleichgültig ob diese singuliert oder im Bulk-Materialfluß sind. Die verwendeten Förderer sind im Allgemeinen elektrisch angetrieben und transportieren tragend das genannte Stückgut zum vorgegebenen Ziel.

Kleine und mittlere Logistiklösungen mit geringen Anforderungen im Materialfluss bei Förderern haben ein begrenztes Leistungsspektrum bei günstigen Lösungen, oder sie leiden, je nach Lösungsanforderung, unter hohen Kosten im Grundaufwand, sowie Kosten durch individuelle Konfigurationen.

Es ist bekannt, elektrische Mikrocontroller-Karten am Förderer einzusetzen. Diese übernehmen die Ansteuerung der Antriebe und die Koordination des Materialflusses zwischen den zwei Förderern in Vorgänger-Nachfolger Beziehung. Die Mikrokontrollerkarten sind in der Regel spezifische Lösungen des Herstellers des Förderers und für diesen speziellen Förderer konzipiert und konstruiert, d.h. nicht ohne weiteres austauschbar. Außerdem ist der Einsatz der Mikrocontroller-Karten auf Kleinspannungsantriebe (z.B. 24V oder 48V) beschränkt und damit auch die Leistung der Antriebe und die Last der Stückgüter.

Die Funktionalität der bekannten Lösung ist durch die Kontroller-Karte mit externer Busankopplung gegeben; Erweiterungen sind jedoch in der vorgegebenen Produktfunktionalität beschränkt und nur durch den Hersteller möglich, dem Kunden sind Erweiterungen nicht zugängig. Der Grundaufwand ist bei dieser bekannten Lösung zwar gering, doch ist das System unflexibel.

Des Weiteren sind Förderer bekannt, die von Speicherprogrammierbaren Steuerungen (SPS) gesteuert werden die den Status des Förderers aufnehmen und die Stückgutübergabe kontrollieren. Hierbei sind, neben Kleinspannungsantrieben auch Niederspannungsantriebe (z.B. 400V) im Einsatz. Die Energiezuführung und Signalanbindung erfolgt zentral oder dezentral (bus-orientiert). Die Funktionalität wird individuell in der SPS festgelegt, Erweiterungen der logistischen Anlage bedürfen immer Softwareänderungen in der SPS durch den Lieferanten oder den Kunden. Durch die zum Teil erforderliche Individualität ist der Grundaufwand hoch, insbesondere bei kleinen bis mittleren Logistiklösungen mit geringen Anforderungen an den Materialfluss.

Bei dieser Lösung sind auch Motorstarter im Einsatz, welche dezentral am Förderer oder auf dem elektrischen Antrieb montiert sind. Je nach Funktionalität werden diese vollständig von einer zentralen Logik gesteuert oder haben die Möglichkeit, die Statusüberwachung des Antriebs zu übernehmen, um die zentrale Logik zu entlasten. Zu einer Koordination des Materialflusses zwischen zwei Förderer ohne übergeordnete Logik mit Busvernetzung, wie z.B. die Steuerung durch eine SPS, sind sie jedoch nicht fähig.

In der US 2006/0272929 A1 ist ein Fördersystem beschrieben, bei dem ein Antriebscontroller Stückgüter über mehrere Förderabschnitte steuert. Die EP 1 298 771 A2 beschreibt eine Steuereinrichtung für einen über ein Bussystem vernetzbaren Motorstarter. JP 2000 344334 A offenbart ein module control part, das kombiniert ist mit einem Modul zum Prozessieren des Transportes von Objekten, so dass ein module device gebildet wird. Das module controle part ist ausgerüstet mit einer autonomen Kontrollfunktion. Eine Pluralität von module devices werden kombiniert zum Erreichen eines Systems um Objekte zu transportieren.

Der Erfindung liegt die Aufgabe zugrunde, ein intelligentes kostengünstiges und hoch zuverlässiges System zum Antrieb mehrerer miteinander verbundener Förderer zu schaffen, das es mit geringem Aufwand ermöglicht, Mechanik und Elektrotechnik der Förderer auf Modulbasis miteinander zu verbinden und bei Bedarf zu erweitern oder zu ändern.

Zur Lösung der Aufgabe wird ein System mit den im Patentanspruch 1 beschriebenen Merkmalen vorgeschlagen, Ausgestaltungen der Erfindung ergeben sich aus den Unteransprüchen.

Die miteinander verbundenen intelligenten Motorstarter sind unabhängig von überlagerten Speicherprogrammierbaren Steuerungen, Mikrocontrollern, Bus-Systemen u.a.. Die mit den erfindungsgemäßen Motorstarter ausgerüsteten Förderer sind stand-alone zu betreiben und sie sind in der Lage, über Signalaustausch untereinander digitale Ein- und Ausgänge Vorgänger- und Nachfolgerbeziehungen zwischen zwei Förderern zwecks Übergabe von Stückgütern zu koordinieren.

Die geschaffenen logischen Module werden mit den erforderlichen Funktionen programmiert, jedes Modul wird mit definierten Eigenschaften gemäß den Eigenschaften des Förderers betrachtet. Die Erfindung schafft somit eine autarke Gesamtheit aus den logischen Modulen. Die notwendigen Elemente zur Spannungsversorgung, Schaltgeräte, Bedien- und Statusanzeigeelemente und Schnittstellen werden, vorzugsweise vereinigt in einem Schaltkasten, zu dem intelligenten Motorstarter, der als technisches Produkt mit definierten Eigenschaften betrachtet wird.

Durch die Verwendung von Standardindustriekomponenten in dem daraus entwickelten intelligenten Motorstarter ist man unabhängig vom Hersteller des Förderers und dessen

Ausführung. Zudem verfügen die Standard-Industriekomponenten über hohe Zuverlässigkeit, welche in der Regel durch die Anwendung von Normen und Zertifizierung von unabhängigen Prüforganisationen belegt ist. Verschiedene Förderer mit Kleinspannungs- oder Niederspannungsantrieben können mit dem System nach der Erfindung miteinander verbunden werden, ohne dass individuelle Anpassungen (z.B. in einer Speicherprogrammierbaren Steuerung) an Software und Hardware nötig ist.

Die Funktionalität ist in den logischen Modulen hinterlegt und beschrieben. Durch verschiedene intelligente Motorstarter können die verschiedenen Eigenschaften der Förderer berücksichtigt werden. Einheitliche Schnittstellen zwischen den Motorstartern erlauben eine Konfektionierung untereinander zu einer gesamteinheitlichen Logistiklösung mit den einzelnen Förderern. Eine übergeordnete Logik kann dabei entfallen. Alle erforderliche Bedien- und Statuselemente können auf dem Motorstarter vorgesehen werden.

Erweiterungen und Änderungen innerhalb der logistischen Lösung können durch Verbinden des intelligenten Motorstarters und des hinzuzufügenden Förderers erzielt werden. Programmierkenntnisse sind hierzu nicht erforderlich, da konfiguriert und verbunden wird. Damit reduzieren sich die Aufwendungen zur Einrichtung einer Anlage aus Förderern erheblich. In vielen Fällen, vor allem für kleine bis mittlere Logistiklösungen, ist die Funktionalität im Produktspektrum der intelligenten Motorstarter ausreichend.

Somit sind Kosten- und Qualitätsvorteile durch einen projektneutralen Fertigungsaufbau in großen Stückzahlen zu erwarten; Projektrealisierungs- und Lieferzeiten werden sich dadurch reduzieren.

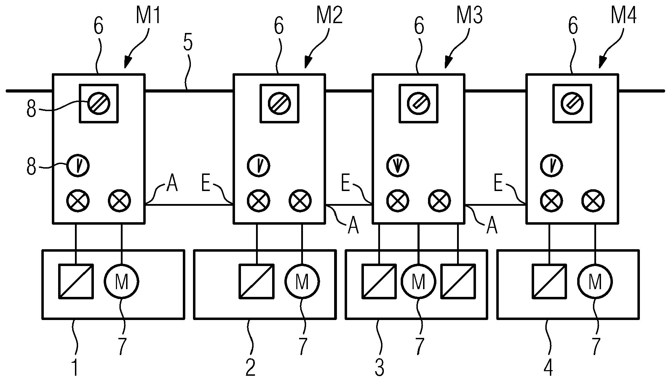

In der einzigen Zeichnungsfigur sind in grob schematischer Darstellung vier zu einer Förderanlage gehörende Förderer 1 bis 4 dargestellt, die gemäß der Erfindung jeweils mit einem intelligenten Motorstarter M1 - M4 verknüpft sind. Die Motorstarter M1 bis M4 werden über einen Energiebus 5 mit der erforderlichen Energie versorgt. Jeder Motorstarter nach der Erfindung ist stand-alone betreibbar, kann aber, wie im dargestellten Beispiel, über digitale Ein- und Ausgänge E und A mit benachbarten Motorstartern M1 bis M4 verknüpft werden, wobei die Motorstarter M1 bis M4 mit den erforderlichen Funktionen programmiert sind. Wie dargestellt, können Motorstarter mit Direktantriebsfunktionalitäten M1, M2 und M4 über die einheitlichen Schnittstellen der digitale Ein- und Ausgänge E und A mit dem entsprechend programmierten Motorstarter M3 für einen Reversierantrieb verbunden werden.

Die Motorstarter M1 bis M4 sind jeweils in einem Schaltkasten 6 angeordnet, der die notwendigen Elementen zur Spannungsversorgung der Motoren 7 und deren Steuerung, die Schaltgeräte und die Schnittstellen enthält und der, wie erkennbar, die Bedien- und Statusanzeigeelementen 8 trägt.

## Patentansprüche

1. Elektrische Ausstattung zur Materialflusskoordination zwischen mehreren stand-alone betreibbaren Förderern zum Fördern von Stückgütern,
umfassend die einzelnen Förderer (1 bis 4) und den einzelnen Förderern (1 bis 4) zugeordnete intelligente Motorstarter (M1 bis M4), die jeweils eine autarke Gesamtheit aus logischen Modulen vereinigen, die unabhängig von einer übergeordneten Logik sind und die mit den zur Materialflusskoordination erforderlichen Funktionen entsprechend den Eigenschaften des Förderers (1 bis 4) programmierbar sind, **dadurch**
**gekennzeichnet, dass**
die verschiedenen Förderer miteinander verbindbar sind, ohne dass individuelle Anpassungen, beispielsweise in einer Speicherprogrammierbaren Steuerung, an Software und Hardware nötig sind.

2. Elektrische Ausstattung nach Anspruch 1,
**gekennzeichnet durch**
eine einheitliche Schnittstelle zwischen den Motorstartern (M1 bis M4) zur Konfektionierung untereinander zu einer gesamteinheitlichen Logistiklösung für die Förderer (1 bis 4) .

3. Elektrische Ausstattung nach Anspruch 2,
**dadurch gekennzeichnet, dass**
über digitale Ein- und Ausgänge (E, A) der intelligenten Motorstarter (M1 bis M4) Vorgänger- und Nachfolgerbeziehungen zur Übergabe von Stückgütern zwischen zwei benachbarten Förderern (1 bis 4) koordinierbar sind.

4. Elektrische Ausstattung nach einem der Ansprüche 1 bis 3,
**dadurch, gekennzeichnet, dass**
jeder intelligente Motorstarter (M1 bis M4) die zu seiner Verwendung erforderlichen elektrischen und/oder elektronischen Elemente in einem Schaltkasten (6) vereinigt.

5. Elektrische Ausstattung nach Anspruch 4, **dadurch**
**gekennzeichnet, dass**
der Schaltkasten (6) die Elemente zur Spannungsversorgung, die Schaltgeräten, Bedien- und Statusanzeigeelementen (8) und Schnittstellen aufnimmt.

6. Elektrische Ausstattung nach Anspruch 4, **dadurch**
**gekennzeichnet, dass**
in miteinander konfektionierbaren unterschiedlichen intelligenten Motorstartern (M1 bis M4) verschiedene Funktionalitäten von Förderern (1 bis 4) hinterlegt sind.

7. Elektrische Ausstattung nach einem der Ansprüche 1 bis 6,
**gekennzeichnet durch** Erweiterungen und Änderungen innerhalb
der logistischen Lösung **durch** Verbinden intelligenter Motorstarter (M1 bis M4) mit hinzufügbaren Förderern (1 bis 4) .

## Claims

1. Electric fitting for material flow coordination between several stand-alone operable conveyors for conveying piece goods,
comprising the individual conveyors (1 to 4) and intelligent motor starters (M1 to M4) assigned to the individual conveyors (1 to 4), each of which join a self-sustaining entity comprising logical modules, which are independent of a higher-order logic and which can be programmed in accordance with the properties of the conveyor (1 to 4) with the functions required for material flow coordination, **characterised in that** the various conveyors can be connected to one another, without the need for individual adjustments, for instance in a programmable logic controller, to software and hardware.

2. Electric fitting according to claim 1,
**characterised by**
a uniform interface between the motor starters (M1 to M4) for mutual tailoring to form a unique logistics solution for the conveyors (1 to 4).

3. Electric fitting according to claim 2,
**characterised in that**
predecessor and successor relationships for transferring piece goods between two adjacent conveyors (1 to 4) can be coordinated by way of digital inputs and outputs (E, A) of the intelligent motor starters (M1 to M4).

4. Electric fitting according to one of claims 1 to 3,
**characterised in that**
each intelligent motor starter (M1 to M4) joins the electric and/or electronic elements required for its use in a switch box (6).

5. Electric fitting according to claim 4, **characterised in that** the switch box (6) receives the elements for supplying voltage, the switching devices, operating and status display elements (8) and interfaces.

6. Electric fitting according to claim 4, **characterised in that** various functionalities of conveyors (1 to 4) are stored in different intelligent motor starters (M1 to M4) which can be tailored to one another.

7. Electric fitting according to one of claims 1 to 6, **characterised by** extensions and amendments within the logistical solution by connecting intelligent motor starters (M1 to M4) with addable conveyors (1 to 4).

## Revendications

1. Équipement électrique destiné à la coordination de flux de matériel entre plusieurs convoyeurs pouvant fonctionner de façon autonome pour convoyer des marchandises en détail, comprenant les différents convoyeurs (1 à 4) et des démarreurs de moteur (M1 à M4) intelligents associés aux différents convoyeurs (1 à 4), qui regroupent respectivement un ensemble autonome de modules logiques, qui sont indépendants d'une logique supérieure et sont programmables avec les fonctions nécessaires à la coordination du flux de matériel correspondant aux propriétés du convoyeur (1 à 4),
**caractérisé en ce que** les différents convoyeurs peuvent être reliés l'un à l'autre sans qu'il ne soit nécessaire d'effectuer des adaptations individuelles, par exemple dans un automate programmable, sur un logiciel ou un matériel informatique.

2. Équipement électrique selon la revendication 1, **caractérisé par** une interface unitaire entre les démarreurs de moteur (M1 à M4) pour les conditionner entre eux afin d'obtenir une solution logistique globale pour les convoyeurs (1 à 4) .

3. Équipement électrique selon la revendication 2, **caractérisé en ce que** des liaisons à un convoyeur précédent et à un convoyeur suivant pour transmettre des marchandises de détail entre deux convoyeurs voisins (1 à 4) peuvent être coordonnées par le biais d'entrées et de sorties numériques (E, A) des démarreurs de moteur intelligents (M1 à M4).

4. Équipement électrique selon l'une des revendications 1 à 3, **caractérisé en ce que** chaque démarreur de moteur (M1 à M4) intelligent regroupe les éléments électriques et/ou électroniques nécessaires à son utilisation dans un coffret électrique (6).

5. Équipement électrique selon la revendication 4, **caractérisé en ce que** le coffret électrique (6) loge les éléments d'alimentation de tension, les appareils de commutation, les éléments de commande, les éléments d'indication d'état (8) et les interfaces.

6. Équipement électrique selon la revendication 4, **caractérisé en ce que** différentes fonctionnalités des convoyeurs (1 à 4) sont enregistrées dans des démarreurs de moteur (M1 à M4) intelligents différents pouvant être conditionnés l'un avec l'autre.

7. Équipement électrique selon l'une des revendications 1 à 6, **caractérisé par** une possibilité d'extensions et de modifications dans la solution logistique grâce à une connexion de démarreurs de moteur intelligents (M1 à M4) avec des convoyeurs qui peuvent être adjoints (1 à 4).
